# FASCICULE DE BREVET EUROPEEN

(11) **EP 0 382 108 B1**
(45) Date de publication et mention de la délivrance du brevet: **20.10.1993**
(21) Numéro de dépôt: 90102047.9
(22) Date de dépôt: 02.02.1990
(51) Int. Cl.: H01S 3/02, H01S 3/05

(54) **Laser muni d'un dispositif de fixation perfectionné de son milieu actif et dispositif de fixation destiné à équiper le laser**
Laser mit Halterungsvorrichtung des aktiven Materials und Halterungsvorrichtung für den Laseraufbau
Laser provided with a securing arrangement for the active medium, and securing arrangement for the laser assembly

(30) Priorité: 09.02.1989 FR 8901797
(43) Date de publication de la demande: 16.08.1990
(73) Titulaire: ASULAB S.A., CH-2501 Bienne (CH)
(72) Inventeur: Sidler, Thomas, CH-2207 Coffrane (CH); Poli, Jean-Charles, CH-2300 La Chaux-de-Fonds (CH)
(74) Mandataire: Caron, Gérard

(56) Documents cités:
- EP-A- 0 296 512
- FR-A- 2 113 804
- US-A- 4 378 601

## Description

L'invention concerne les lasers, notamment les lasers à pompage optique utilisant comme milieu actif, des barreaux dits barreaux "SLAB" selon la désignation anglo-saxonne, et plus particulièrement un dispositif de fixation de ces barreaux dans les lasers.

On connaît déjà du brevet US 4,378,601 un laser à pompage optique ayant un dispositif de fixation d'un barreau "SLAB". Ce laser comprend essentiellement un boîtier destiné à recevoir le barreau et dans lequel circule un fluide de refroidissement. En outre, le laser comprend une source lumineuse disposée de part et d'autre du barreau afin de réaliser un pompage optique dans le milieu actif. Le barreau est monté dans un dispositif de fixation qui peut être introduit dans le boîtier ou en être retiré.

Ce dispositif de fixation comprend, d'une part, des premiers organes de support longitudinaux ayant une section en forme de U, et qui sont munis d'oreilles à leurs extrémités, ces organes enveloppant la face supérieure et la face inférieure du barreau et, d'autre part, des seconds organes de support ayant une configuration complémentaire de celles des extrémités du barreau pour pouvoir s'y fixer. Les oreilles des premiers organes de support coopèrent avec des fentes ménagées dans les seconds organes de support pour maintenir le barreau dans un cadre rigide destiné à être installé dans un boîtier.

Ce dispositif de fixation présente l'avantage de pouvoir rigidement maintenir le barreau dans le laser sans engendrer de contraintes mécaniques dans ce dernier. On évite ainsi les risques de variations d'indice de réfraction dans le barreau, ces variations ayant pour effet d'altérer la qualité du faisceau laser.

Cependant, ce dispositif fait apparaître un inconvénient. En effet, puisque le barreau baigne totalement dans le fluide de refroidissement, mis à part ses extrémités, les faces latérales du barreau sont refroidies comme ses faces supérieures et inférieures. Par suite, le profil de température suivant un trajet perpendiculaire aux faces supérieure et inférieure du barreau varie selon que ce trajet est proche ou éloigné d'une face latérale, et ceci induit des effets de bords diminuant le rendement du laser.

Un autre type de dispositif de fixation du barreau dans un laser, décrit dans le brevet US 4,761,789, tente de remédier à cet inconvénient en isolant les faces latérales du barreau du fluide de refroidissement. Ce laser comprend un barreau placé entre deux lames transparentes, le barreau et les lames étant disposés entre deux plaques de maintien, chacune d'elles comportant une ouverture rectangulaire qui s'étend sensiblement sur la longueur du barreau. Des garnitures d'étanchéité assurent l'étanchéité à la périphérie des ouvertures entre les lames et les plaques de maintien. Sur ces ouvertures sont destinés à s'ajuster, par exemple, des réflecteurs de pompage ayant sensiblement une section en forme de U qui délimitent avec les lames un espace de circulation pour un fluide de refroidissement ainsi qu'un logement pour une source d'excitation optique du barreau. Enfin, entre chaque plaque de maintien et le châssis extérieur est prévu un cadre d'entretoisement délimitant un second canal de refroidissement, l'ensemble étant serré mécaniquement pour garantir une bonne fixation du barreau et une bonne étanchéité.

Toutefois, la solution proposée par le document susmentionné n'apporte pas non plus entière satisfaction. En effet, lors du serrage mécanique de l'ensemble, l'effort de serrage n' est pas contrôlé, si bien qu'il est très difficile d'obtenir un serrage approprié.

Si le serrage est trop important, on induit des contraintes mécaniques dans le barreau et il en résulte des variations d'indice de réfraction qui altèrent la qualité du faisceau.

Par contre, si le serrage est trop faible, la transmission de la quantité de chaleur à travers les lames, les plaques de maintien, et... diminue, faisant chuter par là-même le rendement du laser.

Le document EP-A-0 296 512 décrit également un laser à pompage optique dans lequel le milieu laser est formé par un barreau ayant au moins deux faces opposées entre lesquelles le faisceau laser engendré se propage selon un trajet en Zigzag par réflexion totale sur lesdites faces, et deux faces latérales s'étendant perpendiculairement aux faces opposées ledit barreau étant disposé dans le châssis avec lequel il délimite au moins deux cavités opposées dont des portions de paroi sont formés par lesdites faces opposées du barreau, chaque cavité étant en regard des faces de pompage recevant des moyens d'excitation optique et étant destinée à être parcourue par un fluide de refroidissement, le laser comprenant également un dispositif de fixation du barreau assurant la solidarisation par serrage du barreau par rapport au châssis en s'appuyant sur ce dernier.

Ce document n'enseigne toutefois aucun moyens pour éliminer l'influence de la température sur le fonctionnement du dispositif laser.

L'invention a donc pour but principal de remédier aux inconvénients de l'art antérieur susmentionné en fournissant un laser muni d'un dispositif de fixation d'un barreau éliminant l'influence de la force de serrage tout en isolant thermiquement les faces latérales du barreau.

A cet effet, la présente invention a pour objet un laser à pompage optique tel que défini dans la revendication 1.

Grâce à ce dispositif, on facilite la fixation du barreau dans le laser tout en éliminant l'influence de la force de serrage sur les caractéristiques du faisceau.

Par ailleurs, grâce aux caractéristiques élastiques du dispositif de fixation, la dilation du barreau peut être aisément absorbée lors d'importantes variations de température. Il en résulte ainsi une absence de contraintes mécaniques dans le barreau si bien que le rendement et la qualité du faisceau sont augmentés.

Selon un mode préféré de réalisation de l'invention, la garniture comprend au moins deux longerons appliqués chacun contre une face latérale du barreau et serrés dans le châssis pour assurer l'isolation thermique de ces dernières et au moins quatre éléments de garniture associés deux à deux s'étendant transversalement à la direction longitudinale des longerons à proximité de l'extrémité de ces derniers, lesdits éléments de garniture étant interposés et serrés entre lesdites faces opposées et le châssis pour assurer la solidarisation du barreau par rapport au châssis.

L'invention a aussi pour objet un dispositif de fixation d'un barreau destiné à équiper un laser à pompage optique comprenant un barreau formant le milieu laser et un châssis.

Ce dispositif de fixation est caractérisé en ce qu'il est réalisé par une garniture en matière plastique déformable élastiquement.

Un tel dispositif de fixation permet donc de faciliter le montage et le démontage du barreau hors du châssis sans pour cela risquer de déteriorer le barreau.

Enfin, l'invention a aussi pour objet un élément actif pour un laser à pompage optique comprenant un barreau, et un dispositif de fixation de ce barreau tel que définit plus haut, cet élément actif étant constitué par une cassette faisant partie du châssis.

D'autres caractéristiques et avantages de l'invention apparaîtront clairement à la lecture de la description qui suit de modes de réalisation non limitatifs en liaison avec les dessins ci-joints parmi lesquels :
- la figure 1 est une vue schématique en perspective et en arraché d'un premier mode de réalisation d'un laser selon l'invention,
- les figures 2 et 3 montrent respectivement une vue de face partiellement en coupe et une vue de dessus d'un barreau équipé du dispositif de fixation selon l'invention, et
- la figure 4 est une vue schématique en perspective et en arraché d'un premier mode de réalisation d'une garniture destinée à équiper un laser selon l'invention,
- la figure 5 est une vue schématique en perspective et en arraché d'un second mode de réalisation d'une garniture destinée à équiper un laser selon l'invention,
- la figure 6 montre une vue partielle en coupe d'un second mode de réalisation d'un laser selon l'invention.

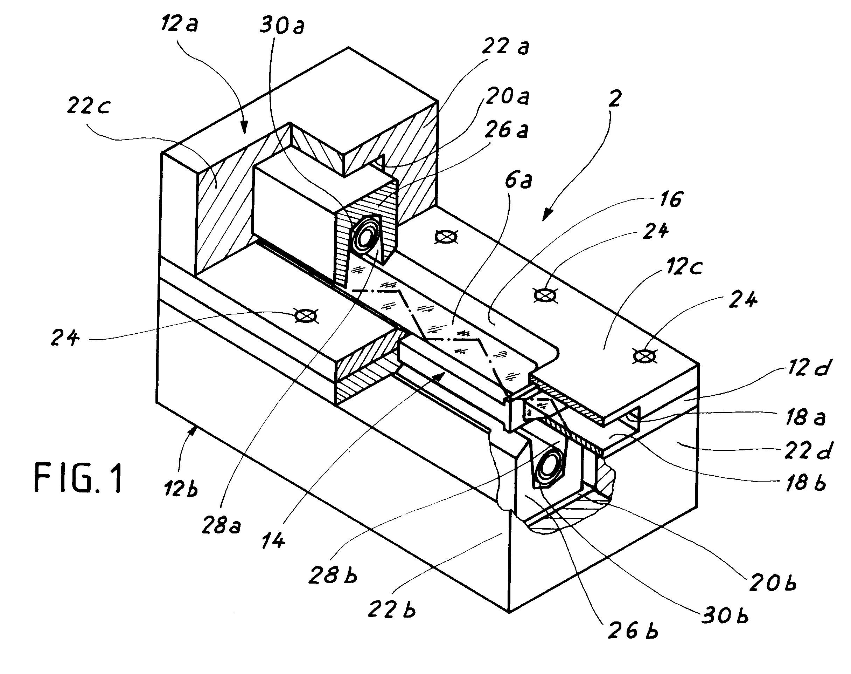

En se référant aux figures 1 à 3, on voit un laser à pompage optique, désigné généralement par la référence numérique 2, montrant les caractéristiques essentielles de l'invention.

Un barreau 4 (appelé "SLAB" dans la terminologie anglo-saxonne) constitue le milieu dans lequel l'effet laser est engendré. Dans le mode de réalisation représenté, le barreau 4 présente une section rectangulaire avec deux grandes faces opposées 6a, 6b qui sont, dans ce cas, à la fois les faces de pompage et les faces de réflexion totale pour conférer au faisceau laser cylindrique engendré un trajet en zigzag.

Le barreau 4 présente aussi deux faces latérales 8a, 8b et deux faces d'extrémité 10a, 10b.

Dans l'exemple illustré, les faces d'extrémité sont taillées sur le barreau sensiblement selon l'angle de Brewster α afin de réduire les pertes. Bien entendu, les faces d'extrémité peuvent être également droites ou inclinées de 180° - 2α par rapport à l'axe optique du laser.

Le barreau 4 est disposé dans un ensemble comprenant essentiellement un châssis en deux parties 12a, 12b et un dispositif de fixation du barreau désigné généralement par la référence numérique 14. Les deux parties du châssis s'étendent symétriquement de part et d'autre des faces 6a, 6b du barreau.

Dans ce cas, le châssis 12a, 12b comprend également deux éléments supplémentaires 12c, 12d formant une cassette dans laquelle le barreau 4 est monté.

Chaque élément de cassette est réalisé en métal massif, de préférence en acier inoxydable et présente une forme générale plane. En outre, chaque élément 12c, 12d comprend, d'une part, une ouverture 16 de forme sensiblement rectangulaire allongée, ménagée dans sa partie centrale pour permettre le passage de la lumière d'excitation du barreau. D'autre part, chaque élément 12c, 12d présente à ses extrémités et dans le prolongement de ladite ouverture 16 une rainure 18a, 18b débouchant vers l'extérieur. Ainsi, lorsque les éléments de cassette sont assemblés, ces rainures, ménagées en regard les unes des autres, définissent une fenêtre en regard de chaque face 10a, 10b du barreau. Ces fenêtres permettent le passage du faisceau laser.

On notera que cette cassette constitue de manière avantageuse un élément de laser indépendant pouvant être rapidement et facilement installé dans le laser.

Chaque partie de châssis 12a, 12b présente un fond 20a, 20b ayant la forme d'un rectangle allongé à partir duquel s'étendent perpendiculairement deux parois latérales 22a, 22b et deux parois d'extrémité 22c, 22d, définissant une cavité dans laquelle circule un fluide de refroidissement (non représenté).

Les deux parties du châssis 12a, 12b sont reliées ensemble par l'intermédiaire d'une pluralité de vis 24 représentées au dessin par des traits d'axe.

On notera également que, dans l'exemple représenté, chaque partie du châssis 12a, 12b est réalisé par usinage en une seule pièce.

Bien entendu, ces dernières pourraient être réalisées en plusieurs pièces assemblées par vissage ou analogue.

Chaque partie du châssis 12a, 12b comprend en outre un réflecteur de pompage 26a, 26b, fixé rigidement à son fond 20a, 20b. Ces réflecteurs 26a, 26b sont des pièces allongées présentant une section transversale sensiblement en forme de U, et qui s'étendent au-dessus des faces 6a, 6b du barreau sur la totalité de sa longueur. Le fond et les parois latérales de chaque réflecteur 26a, 26b sont réalisés de manière à présenter des faces de réflexion 28a, 28b garnies par exemple, d'une couche d'or ou de matière diffusante telle que de l'oxyde de magnésium.

Les parties du châssis 12a, 12b forment également chacune un support et un logement pour une source d'excitation optique 30a, 30b du barreau. Chaque source d'excitation est constituée par un tube recevant une lampe à décharge, et délimitant autour de celle-ci une canalisation de circulation d'un fluide de refroidissement.

Le laser selon l'invention illustré aux figures 1 à 3 présente un premier mode de montage du dispositif de fixation 14.

Ce dispositif de fixation 14 du barreau est constitué par une garniture en matière plastique déformable élastiquement. De préférence, la garniture est réalisée en une matière plastique faisant partie de la famille chimique des silicones. Bien entendu, tout autre matière présentant des caractéristiques de déformation élastique et d'isolation thermique semblables à celles des silicones peut convenir.

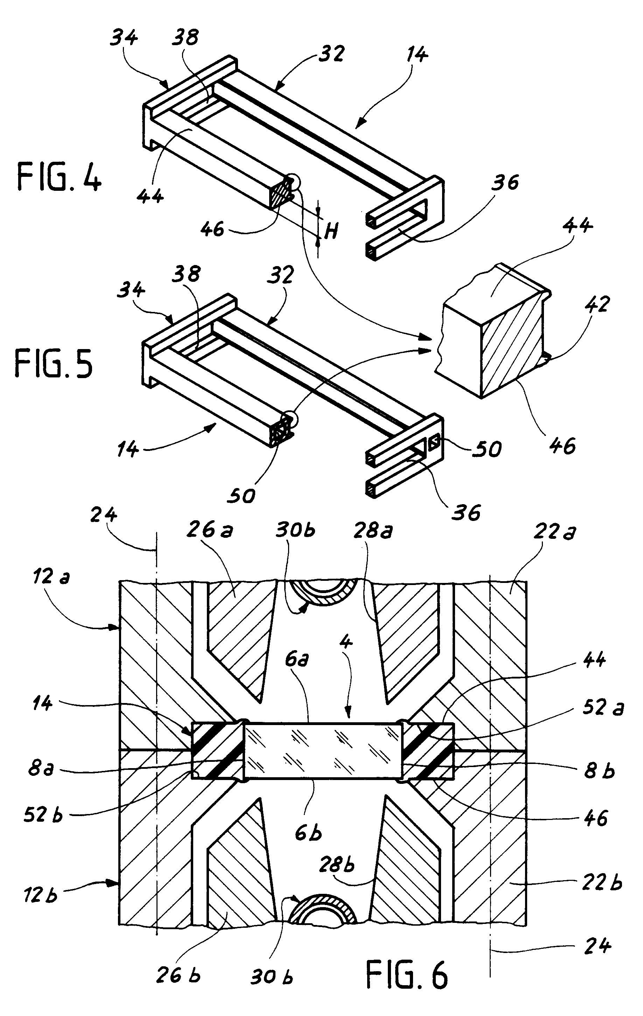

La garniture 14 a pour rôles, d'une part, d'assurer la solidarisation par serrage du barreau 4 par rapport au châssis 12a, 12b en s'appuyant sur ce dernier, et d'autre part, d'assurer l'isolation thermique des faces latérales 8a, 8b du barreau afin d'obtenir une répartition uniforme de la température dans des plans parallèles aux faces de pompage du barreau. Il en résulte donc une diminution des effets de bord, qui augmente le rendement du laser. A cet effet, cette garniture présente une configuration (décrite plus précisément ci-après) telle, qu'elle peut recevoir le barreau et être facilement mise en place dans la cassette faisant partie du châssis (figure 1) ou directement dans le châssis (figure 6) selon le cas.

Comme il ressort notamment de la figure 4, on voit que la garniture 14, réalisée en une seule pièce par exemple par moulage, comprend essentiellement deux longerons 32 parallèles et quatre éléments de garniture 34, ci-après dénommés traverses, associés deux à deux. Les longerons 32 sont espacés l'un de l'autre d'une distance corespondant sensiblement à la largeur du barreau et les traverses s'entendent transversalement à la direction longitudinale de ces derniers pour les relier à leurs extrémités.

La garniture définit ainsi deux fenêtres 36, 38 ayant les dimensions de la section du barreau qu'elle est destinée à recevoir. Chaque fenêtre est formée par les traverses et la partie extrême de chaque longeron.

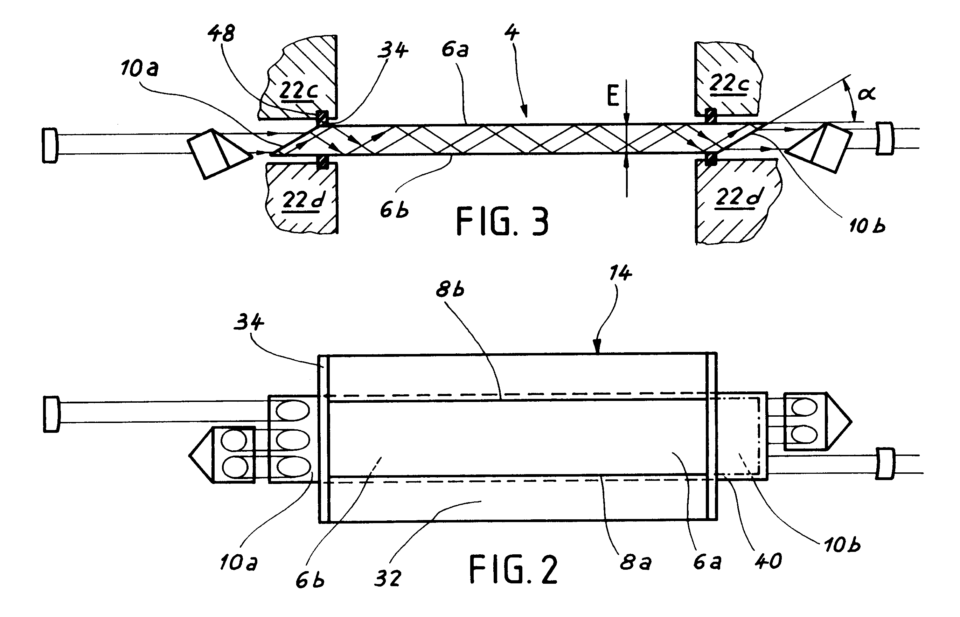

En se référant également aux figures 2 et 3, on voit que le barreau peut être facilement introduit par une extrémité dans les fenêtres et soutenu par les traverses, et que de manière avantageuse, le serrage du barreau par l'intermédiaire du joint est réalisé dans une zone de bord 40, où le faisceau ne se réfléchit pas, si bien que le rendement du laser n'est pas diminué.

Ainsi, lorsque le barreau est mis en place dans la garniture, les longerons s'appliquent par leurs faces en regard contre les faces latérales du barreau et s'étendent sensiblement sur la portion de longueur de ce dernier comprise entre ses parties biseautées.

De préférence, les longerons ont chacun une hauteur H sensiblement égale à l'épaisseur E du barreau, et les deux arêtes des faces en regard de chaque longeron sont munies chacune d'une lèvre 42 s'étendant sur la longueur de ce dernier.

Ainsi, chaque paire de lèvres associée à un longeron définit une rainure pour recevoir le barreau, de sorte que les lèvres recouvrent les zones de bord des faces opposées 6a, 6b du barreau lorsque celui-ci est mis en place dans la garniture.

En outre, les traverses reliant les longerons sont ménagées afin d'apparaître en surépaisseur de part et d'autre des faces supérieures 44 et inférieures 46 des longerons si bien que ces traverses, destinées à être interposées entre les faces opposées 6a, 6b et le châssis peuvent être aisément serrées et déformées pour maintenir le barreau dans le châssis.

Par ailleurs, afin de faciliter les opérations d'usinage des parties du châssis recevant la garniture et de s'adapter au profil des faces latérales 8a, 8b du barreau, les longerons et les traverses présentent une section droite sensiblement carrée.

De préférence, les zones du châssis venant en contact avec lesdites traverses présentent des rainures 48 (figure 3) de formes complémentaires à celles des traverses. Bien entendu, ces rainures ont une profondeur telle que lorsque le barreau est serré dans le châssis, ce dernier ne vient pas en contact avec le barreau.

Il résulte de cette configuration que le positionnement du barreau dans le châssis est facilité tout en éliminant le risque de contact direct entre le châssis et le barreau aussi bien au moment du montage dans le laser que pendant son utilisation.

Dans une variante de réalisation de la garniture selon l'invention représentée à la figure 5, on a prévu dans chaque longeron un évidement 50 traversant ce dernier de part en part. Cet évidement réalisé au moment de la fabrication du joint assure une meilleure isolation thermique des faces latérales du barreau créant entre le châssis et ces derniers un canal d'air.

Pour éviter un vieillissement trop rapide de la garniture dû à une trop grande exposition de celle-ci aux rayonnements lumineux lors du fonctionnement du laser, il est avantageux de prévoir que les parties du barreau venant directement en contact avec la garniture soient revêtues d'une couche de protection (non représentée), formant écran et constituée par une couche métallique déposée sous vide.

On notera également que selon l'invention, la garniture assure, outre l'isolation thermique des faces latérales du barreau, l'étanchéité de la cavité contenant le fluide de refroidissement vis-à-vis de l'extérieur.

Enfin, en se référant à la figure 6, on voit un second mode de montage du dispositif de fixation 14 d'un barreau 4 dans un laser dans lequel on a désigné les éléments identiques à ceux décrits précédemment par les mêmes références numériques.

Alors que dans le mode de montage représenté à la figure 1, le châssis comprend une cassette dans laquelle est montée le barreau au moyen de la garniture selon l'invention, dans le second mode de montage le châssis ne comprend que deux éléments qui coopèrent directement avec la garniture 14 pour fixer le barreau 4 dans le laser. Pour ce faire, les parties extrêmes des deux parois latérales 22a, 22b et des deux parois d'extrémité 22c, 22d du châssis présentent une configuration complémentaire à la partie du joint avec laquelle elles sont en contact fonctionnel. Ainsi, les parties extrêmes des parois latérales 22a, 22b présentent un décrochement formant une marche 52a, 52b dirigée vers la cavité si bien que quand les deux parties de châssis 12a, 12b sont assemblées, les deux marches de la partie 12a de châssis coopèrent chacune avec les marches 52b ménagées en regard dans l'autre partie 12b de châssis afin de délimiter deux logements destinés à recevoir les longerons de la garniture 14.

Bien entendu, l'invention n'est pas limitée aux modes de réalisation décrits et l'on peut prévoir des variantes sans sortir de son cadre. On peut notamment prévoir d'utiliser le dispositif selon l'invention dans un laser dans lequel le milieu actif est un fluide, ce dernier étant confiné dans une enceinte étanche en un matériau transparent ayant la forme d'un barreau "SLAB".

## Revendications

1. Laser à pompage optique (2) dans lequel le milieu laser est formé par un barreau (4) ayant au moins deux faces opposées (6a, 6b) entre lesquelles le faisceau laser engendré se propage selon un trajet en Zigzag par réflexion totale sur lesdites faces, et deux faces latérales (8a, 8b) s'étendant perpendiculairement aux faces opposées ledit barreau (4) étant disposé dans un châssis (12a, 12b ; 12c, 12d) avec lequel il délimite au moins deux cavités opposées dont des portions de paroi sont formés par lesdites faces opposées du barreau, chaque cavité étant en regard des faces de pompage recevant des moyens d'excitation optique (30a, 30b) et étant destinée à être parcourue par un fluide de refroidissement, le laser comprenant également un dispositif de fixation (14) du barreau assurant la solidarisation par serrage du barreau par rapport au châssis en s'appuyant sur ce dernier, caractérisé en ce que ledit dispositif de fixation est réalisé par une garniture (14) en matière plastique déformable élastiquement et en ce qu'il assure l'isolation thermique des faces latérales du barreau.

2. Laser selon la revendication 1, caractérisé en ce que la garniture (14) comprend au moins deux longerons (32) appliqués chacun contre une face latérale (8a, 8b) du barreau et serrés dans le châssis pour assurer l'isolation thermique de ces dernières, et au moins quatre éléments de garniture (34) associés deux à deux et s'étendant transversalement à la direction longitudinale des longerons à proximité de leurs extrémités, lesdits éléments de garniture étant interposés et serrés entre lesdites faces opposées (6a, 6b) et le châssis pour assurer la solidarisation du barreau par rapport au châssis.

3. Laser selon la revendication 2, caractérisé en ce que les longerons (32) sont évidés dans leur sens longitudinal.

4. Laser selon les revendications 2 ou 3, caractérisé en ce que la section transversale des longerons (32) et des éléments de garniture (34) est en forme de quadrilatère.

5. Laser selon l'une quelconque des revendications 2 à 4, caractérisé en ce que les deux arêtes des faces en regard de chaque longerons sont munies chacune d'une lèvre (42) s'étendant sur la longueur de ce dernier.

6. Laser selon l'une quelconque des revendications 1 à 5, caractérisé en ce que la garniture (14) est réalisée en une seule pièce.

7. Laser selon l'une quelconque des revendications précédentes, caractérisé en ce que la garniture est réalisée en une matière faisant partie de la famille chimique des silicones.

8. Dispositif de fixation destiné à équiper un laser à pompage optique (2) comprenant un barreau (4) formant le milieu laser et un châssis (12a, 12b), caractérisé en ce que ledit dispositif de fixation est réalisé par une garniture (14) en matière plastique déformable élastiquement et en ce qu'il assure l'isolation thermique des faces latèrales du barreau.

9. Dispositif de fixation selon la revendication 8 destiné à équiper un laser à pompage optique dans lequel le barreau présente au moins deux faces opposées entre lesquelles le faisceau laser engendré se propage selon un trajet en zigzag par réflexion totale sur lesdites faces, et deux faces latérales s'étendant perpendiculairement aux faces opposées, caractérisé en ce que la garniture comprend au moins deux longerons destinés à être appliqués chacun contre une face latérale du barreau et à être serrés dans le châssis pour assurer l'isolation thermique de ces dernières et au moins quatre éléments de garniture associés deux à deux s'étendant transversalement à la direction longitudinale des longerons à proximité de leurs extrémités, lesdits éléments de garniture étant destinés à être interposés et serrés entre lesdites faces opposées et le châssis pour assurer la solidarisation du barreau par rapport au châssis.

10. Dispositif de fixation selon la revendication 9, caractérisé en ce que les longerons (32) sont évidés dans leur sens longitudinal.

11. Dispositif de fixation selon l'une quelconque des revendications 9 ou 10, caractérisé en ce que la section transversale des longerons (32) et des éléments de garniture (34) est en forme de quadrilatère.

12. Dispositif de fixation selon l'une quelconque des revendications 9 à 11, caractérisé en ce que les deux arêtes des faces en regard, de chaque longeron sont munies chacune d'une lèvre (42) s'étandant sur la longueur de ce dernier.

13. Dispositif de fixation selon l'une quelconque des revendications 8 à 10, caractérisé en ce que la garniture (14) est réalisée en une seule pièce.

14. Dispositif de fixation selon l'une quelconque des revendications 8 à 13, caractérisé en ce que la garniture (14) est réalisée en une matière faisant partie de la famille chimique des silicones.

15. Elément actif pour un laser à pompage optique comprenant un barreau, caractérisé en ce qu'il comprend en outre un dispositif de fixation de ce barreau selon l'une quelconque des revendications 8 à 14, mis en place dans une cassette constituant un élément de châssis.

## Claims

1. Optical pumped laser (2) in which the laser medium is formed by a slab (4) having at least two opposed faces (6a, 6b) between which the generated laser beam propagates along a zigzag path by total reflection on said faces, and two lateral faces (8a, 8b) extending perpendicularly to said opposed faces, said slab (4) being arranged in a framework (12a, 12b; 12c, 12d) together with which it bounds at least two opposed cavities, wall portions of which are formed by said opposed faces of the slab, each cavity being opposite to said pumping faces receiving optical excitation means (30a, 30b) and being adapted to be traversed by a cooling fluid, the laser further comprising slab securing means (14) assuring the rigid interconnection of the slab and the framework by pressing on the former, characterized in that said securing means comprises an elastically deformable fitting (14) of plastic material and in that it assures the thermal insulation of the lateral faces of the slab.

2. Laser according to claim 1, characterized in that the fitting (14) comprises at least two beams (32), each applied against a lateral face (8a, 8b) of the slab and clamped in the framework in order to assure the thermal insulation of the latter, and at least four fitting elements (34) associated two by two and extending transversally to the longitudinal direction of the beams proximate their ends, said fitting elements being interposed and clamped between said opposed faces (6a, 6b) and the framework so as to assure the rigid interconnection of the slab and the framework.

3. Laser according to claim 2, characterized in that the beams (32) are hollowed out in their longitudinal direction.

4. Laser according to claims 2 or 3, characterized in that the transversal cross section of the beams (32) and the fitting elements (34) is of quadrilateral form.

5. Laser according to any one of claims 2 to 4, characterized in that the two edges of the facing surfaces of each beam are each provided with a lip (42) extending over the length thereof.

6. Laser according to any one of claims 1 to 5, characterized in that the fitting (14) is made from an integral piece.

7. Laser according to any one of the preceding claims, characterized in that the fitting is formed of a material belonging to the chemical group of silicones.

8. Securing arrangement intended to be fitted on an optically pumped laser (2) including a slab (4) forming the laser medium and a framework (12a, 12b), characterized in that said securing arangement comprises an elastically deformable fitting (14) of plastic material and in that it assures the thermal insulation of the lateral faces of the slab.

9. Securing arrangement according to claim 8 intended to be fitted on an optical pumped laser in which the slab exhibits at least two opposed faces between which the generated laser beam propagates along a zigzag path by total reflection on said faces, and two lateral faces extending perpendicularly to said opposed faces, characterized in the fitting comprises at least two beams each intended to be applicated against a lateral face of the slab and to be clamped in the framework so as to assure the thermal insulation of the latter, and at least four fitting elements associated two by two extending transversally to the longitudinal direction of the beams proximate their ends, said fitting elements being intended to be interposed and clamped between said opposed faces and the framework so as to assure the rigid interconnection of the slab relative to the framework.

10. Securing arrangement according to claim 9, characterized in that the beams (32) are hollowed out in their longitudinal direction.

11. Securing arrangement according to any one of claims 9 or 10, characterized in that the transversal cross section of the beams (32) and the fitting elements (34) is of quadrilateral form.

12. Securing arrangement according to any one of claims 9 to 11, characterized in that the two edges of the facing surfaces of each beam are each provided with a lip (42) extending over the length thereof.

13. Securing arrangement according to any one of claims 8 to 10, characterized in that the fitting (14) made from an integral piece.

14. Securing arrangement according to any one of claims 8 to 13, characterized in that the fitting is formed of a material belonging the chemical group of silicones.

15. Active element for an optically pumped laser comprising a slab, characterized in that it further comprises a slab securing arrangement according to any one of claims 8 to 14, set in place within a cassette constituting an element of the framework.

## Patentansprüche

1. Optisch gepumpter Laser (2), bei dem das Lasermaterial als Stab (4) ausgebildet ist mit mindestens zwei einander gegenüberliegenden Oberflächen (6a, 6b), zwischen denen sich der erzeugte Laserstrahl in einer Zickzackbahn infolge Totalreflexion an den genannten Oberflächen ausbreitet, und zwei Seitenflächen (8a, 8b), die sich senkrecht zu den einander gegenüberliegenden Oberflächen erstrecken, welcher Stab (4) in einem Gestell (12a, 12b; 12c, 12d) angeordnet ist, mit dem er mindestens zwei einander gegenüberliegende Hohlräume begrenzt, von denen Abschnitte der Wandungen von den genannten einander gegenüberliegenden Staboberflächen gebildet werden, wobei jeder Hohlraum der Pumpseite gegenüberliegt, die die optischen Anregungsmittel (30a, 30b) aufnehmen und dazu bestimmt sind, von einem Kühlfluid durchströmt zu werden, welcher Laser ferner eine Befestigungseinrichtung (14) des Stabes umfaßt, welcher die Verbindung des Stabes mit dem Gestell durch Einspannen des Stabes bewirkt, indem sie sich an den letzteren anlegt, dadurch gekennzeichnet, daß die Befestigungseinrichtung von einer Packung (14) aus einem elastischen deformierbaren Kunststoffmaterial gebildet wird und daß sie die thermische Isolation der Seitenflächen des Stabes sicherstellt.

2. Laser nach Anspruch 1, dadurch gekennzeichnet, daß die Packung (14) mindestens zwei Längsabschnitte (32) umfaßt, die sich jeweils gegen eine Seitenfläche (8a, 8b) des Stabes anlegen und in das Gestell eingespannt sind, um die thermische Isolation dieser letzteren sicherzustellen, sowie mindestens vier Packungselemente (34) umfaßt, die paarweise einander zugeordnet sind und sich quer zur Längsrichtung der Längsteile erstrecken nahe deren Enden, wobei die Elemente der Packung eingefügt und eingespannt sind zwischen den einander gegenüberliegenden Oberflächen (6a, 6b) und dem Gestell zum Sicherstellen der Verbindung des Stabes mit dem Gestell.

3. Laser nach Anspruch 2, dadurch gekennzeichnet, daß die Längsteile (32) in ihrer Längsrichtung hohl sind.

4. Laser nach Anspruch 2 oder 3, dadurch gekennzeichnet, daß der Querschnitt der Längsteile (32) und der Packungselemente (34) eine vierseitige Form hat.

5. Laser nach einem der Ansprüche 2 bis 4, dadurch gekennzeichnet, daß die beiden Kanten der einander gegenüberliegenden Seiten der Längsteile jeweils mit einer Lippe (42) versehen sind, die sich über die Länge der letzteren erstrecken.

6. Laser nach einem der Ansprüche 1 bis 5, dadurch gekennzeichnet, daß die Packung (14) einstückig hergestellt ist.

7. Laser nach einem der vorangehenden Ansprüche, dadurch gekennzeichnet, daß die Packung aus einem Material hergestellt ist, das zur chemischen Familie der Silikone gehört.

8. Befestigungseinrichtung, bestimmt zum Ausstatten eines optisch gepumpten Lasers (2) mit einem Stab (4), der das Lasermaterial bildet, und eines Gestells (12a, 12b), dadurch gekennzeichnet, daß die Befestigungseinrichtung als eine Packung (14) aus einem elastisch defomierbaren Kunststoffmaterial realisiert ist und daß sie die thermische Isolation der Seitenflächen des Stabes sicherstellt.

9. Befestigungsvorrichtung nach Anspruch 8, bestimmt zur Ausstattung eines optisch gepumpten Lasers, bei dem der Stab mindestens zwei einander gegenüberliegende Oberflächen aufweist, zwischen denen der erzeugte Laserstrahl sich längs einer Zickzackbahn infolge Totalreflexion an den genannten Oberflächen ausbreitet und zwei Seitenflächen aufweist, die sich senkrecht zu den einander gegenüberliegenden Oberfächen erstrecken, dadurch gekennzeichnet, daß die Packung mindestens zwei Längsteile umfaßt, dazu bestimmt, sich an jeweils eine der Seitenflächen des Stabes anzulegen und in dem Gestell eingespannt zu werden zum Bewirken der thermischen Isolation dieser letzteren, und mindestens vier paarweise einander zugeordnete Packungselemente, die sich quer zur Längsrichtung der Längsteile nahe deren Enden erstrecken, welche Packungselemente dazu bestimmt sind, zwischen die genannten einander gegenüberliegenden Oberflächen und dem Gestell eingefügt und eingespannt zu werden zum Sicherstellen der Verbindung des Stabes mit dem Gestell.

10. Befestigungseinrichtung nach Anspruch 9, dadurch gekennzeichnet, daß die Längsteile (32) in ihrer Längsrichtung hohl sind.

11. Befestigungseinrichtung nach einem der Ansprüche 9 oder 10, dadurch gekennzeichnet, daß der Querschnitt der Längsteile (32) und der Packungselemente (34) Vierseitform aufweist.

12. Befestigungseinrichtung nach einem der Ansprüche 9 bis 11, dadurch gekennzeichnet, daß die beiden Kanten der einander gegenüberliegenden Flächen jedes Längsteils jeweils mit einer Lippe (42) versehen sind, die sich über die Länge dieser letzteren erstrecken.

13. Befestigungseinrichtung nach einem der Ansprüche 8 bis 10, dadurch gekennzeichnet, daß die Packung (14) einstückig hergestellt ist.

14. Befestigungseinrichtung nach einem der Ansprüche 8 bis 13, dadurch gekennzeichnet, daß die Packung (14) aus einem Material hergestellt ist, das zur chemischen Familie der Silikone gehört.

15. Aktives Element für einen optisch gepumpten Laser, umfassend einen Stab, dadurch gekennzeichnet, daß es ferner eine Befestigungseinrichtung dieses Stabes nach einem der Ansprüche 8 bis 14 umfaßt, angebracht in einer Kassette, welche ein Element des Gestells bildet.
